**Europäisches Patentamt**

**European Patent Office**

**Office européen des brevets**

(11) Veröffentlichungsnummer: **0 070 920**
**B1**

(12) **EUROPÄISCHE PATENTSCHRIFT**

(45) Veröffentlichungstag der Patentschrift:
**24.10.84**

(21) Anmeldenummer: **81106733.9**

(22) Anmeldetag: **28.08.81**

(51) Int. Cl.³: **B 01 D 53/18,** F 28 F 25/08

(54) **Kolonne für Stoff- und direkten Wärmeaustausch.**

(30) Priorität: **30.07.81 CH 4927/81**

(43) Veröffentlichungstag der Anmeldung:
**09.02.83 Patentblatt 83/6**

(45) Bekanntmachung des Hinweises auf die Patenterteilung:
**24.10.84 Patentblatt 84/43**

(84) Benannte Vertragsstaaten:
**DE FR GB IT NL SE**

(56) Entgegenhaltungen:
**EP - A - 0 036 944**
**FR - A - 2 278 033**

(73) Patentinhaber: **GEBRÜDER SULZER
AKTIENGESELLSCHAFT, Zürcherstrasse 9,
CH-8401 Winterthur (CH)**

(72) Erfinder: **Meier, Werner, Dr., Rosenweg 1, CH-8353 Elgg
(CH)**

(74) Vertreter: **Dipl.-Ing. H. Marsch Dipl.-Ing. K. Sparing
Dipl.-Phys.Dr. W.H. Röhl Patentanwälte,
Rethelstrasse 123, D-4000 Düsseldorf (DE)**

## Beschreibung

Die Erfindung betrifft eine Kolonne für Stoff- und direkten Wärmeaustausch gemäss dem Oberbegriff des Patentanspruches 1.

Eine derartige Kolonne ist aus der CH-PS Nr. 398503 bekannt. Hierbei bilden die Lamellen Rieselflächen für die abwärts strömende Phase, während der freie Raum der von gefalteten, Lamellen gebildeten, sich kreuzenden Kanäle von der aufwärts strömenden Phase, bei Rektifizierkolonnen von der Gasphase, bzw. der flüssigen Phase bei Extraktionskolonnen durchsetzt wird.

Unter dem Begriff Faltung soll sowohl eine zakkenförmige als auch eine wellenförmige Profilierung verstanden werden.

Bei den bekannten Einbauelementen sind die Lamellen gleichmässig über ihre ganze Oberfläche gefaltet. Dieses hat zur Folge, dass die gesamte Oberfläche der Rieselflächen mit einem Film gleicher Dicke bedeckt ist und der Konzentrationsausgleich zwischen den beiden Phasen ausschliesslich aufgrund von Diffusionsvorgängen bewirkt wird.

Ausserdem weisen die bekannten Einbauelemente einen relativ grossen Druckabfall auf.

Aus der EP-A Nr. 0036944 (Priorität: 2.4.80, Anmeldetag: 21.2.81, Veröffentlichungstag: 7.10.81) ist eine Kolonne mit Einbauelementen bekannt. Hierbei sollen die einzelnen Einbauelemente aus einer Mehrzahl unter Bildung paralleler Strömungskanäle beliebigen Querschnitts aufeinandergelegter und miteinander verbundener gewellter oder gefalteter Folien bestehen, die in Querrichtung abwechselnd gewellte oder gefaltete und gleich breite ebene Abschnitte aufweisen und so geschichtet sind, dass die gewellten oder gefalteten Abschnitte einer Folie auf den ebenen Abschnitten benachbarter Folien liegen. Durch diese Ausbildungsweise soll erreicht werden, dass die Folien so ohne Gefahr des Ineinanderrutschens gestapelt werden können.

Demgegenüber hat es sich die Erfindung zum Ziel gesetzt, ein Einbauelement derart zu gestalten, dass einerseits ein beschleunigter Stoff- bzw. Wärmeaustausch erreicht wird und andererseits der Druckabfall gegenüber den bekannten Einbauelementen reduziert wird.

Diese Aufgabe wird erfindungsgemäss mit den Massnahmen des Kennzeichens des Patentanspruches 1 erreicht.

Aufgrund des erfindungsgemässen Unterbruchs der Faltung der einzelnen Lamellen durch steilere Abschnitte wird z.B. bei der Rektifikation eine weniger häufige Umlenkung der Gasphase bewirkt, was eine wesentliche Reduktion des Druckabfalls längs eines Einbauelementes zur Folge hat.

Die für den Stoffaustausch massgebende Oberfläche des Rieselfilms kann dadurch gegenüber den bekannten Einbauelementen bei gleichem Druckverlust vergrössert werden.

Ein beschleunigter Stoff- oder Wärmeaustausch wird dadurch bewirkt, dass sich die Filmdicke beim Übergang von den gefalteten Abschnitten auf die steileren Abschnitte und von diesen auf die nächsten gefalteten Abschnitte ändert und somit jeweils eine neue Flüssigkeitsoberfläche entsteht, indem der Flüssigkeitsstrom in den steileren Abschnitten beschleunigt und in den Abschnitten mit Faltungen gebremst wird.

Durch diesen abwechslungsweisen Vorgang gelangen Teilchen aus dem Flüssigkeitskernstrom an die Oberfläche und umgekehrt. Diese mechanische Bewegung ist um ein Vielfaches rascher als die Bewegung der Moleküle durch Diffusion. Dieses hat zur Folge, dass Konzentrations- oder Temperaturunterschiede nicht alleine durch Diffusion, sondern durch rasche Bewegung der einzelnen Flüssigkeitsteilchen gegeneinander ausgeglichen werden. Hierdurch wird der Austauschvorgang wesentlich verbessert.

Die Erfindung wird im folgenden anhand von in der Zeichnung dargestellten Ausführungsbeispielen erläutert. Hierbei zeigt:

Fig. 1 in perspektivischer Darstellung einen Ausschnitt eines Einbauelementes, während die

Fig. 2 und 3 Seitenansichten eines Ausschnittes, und die

Fig. 4 bis 7 in schematischer Darstellungsweise verschiedene Ausführungsformen von durch steilere Abschnitte unterbrochenen Lamellen zeigen.

Der Querschnitt des Einbauelementes kann z.B. quadratisch als auch kreisförmig sein, wenn die Kolonne kreiszylindrisch ausgebildet ist. In diesem Fall ist das Einbauelement in seinen Randzonen dem Innenmantel der Kolonne angepasst.

Im Ausführungsbeispiel besteht das Einbauelement 1 aus parallelen, gefalteten Lamellen 2, die derart angeordnet sind, dass sich die Faltungen 3 von sich berührenden, benachbarten Lamellen kreuzen.

Die sich kreuzenden Faltungen 3 von jeweils zwei benachbarten Lamellen 2 bilden offene, sich kreuzende Strömungskanäle 4.

Die Strömungsrichtung der flüssigen Phase ist mit dem Pfeil F und die der gasförmigen Phase mit dem Pfeil G bezeichnet, im Falle eines Gasflüssigkeitsaustausches.

Mit den Linien U ist die Kontur des Ausschnittes des Einbauelementes 1 schematisch angedeutet.

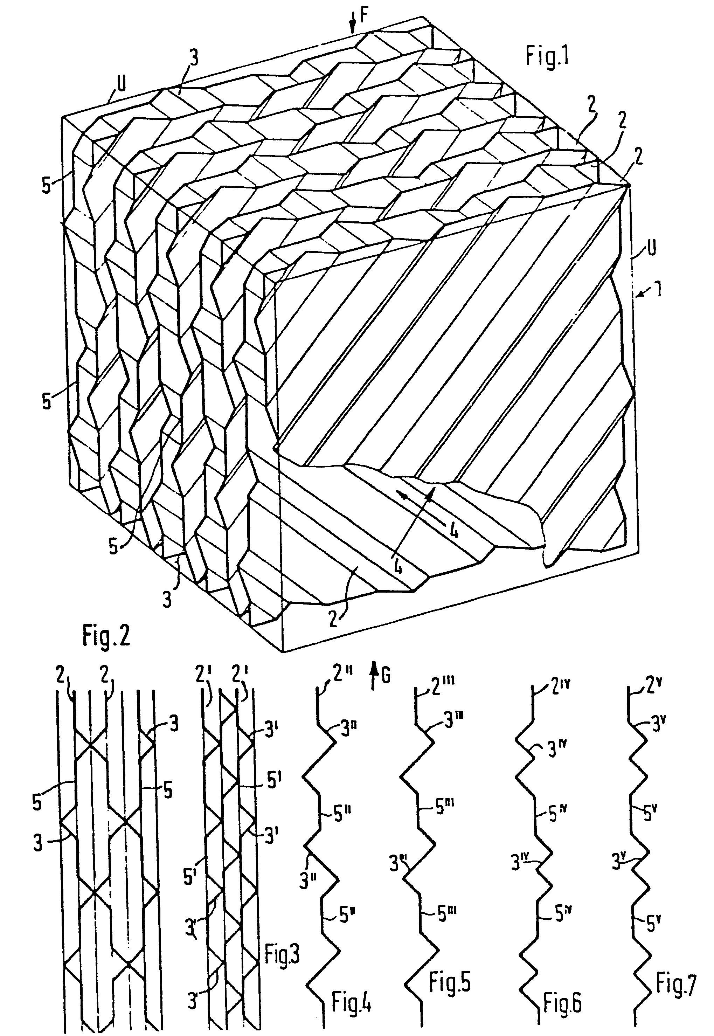

Die Faltung 3 einer jeden Lamelle ist durch steilere Abschnitte 5 unterbrochen. Die in Fig. 1 dargestellten Lamellen sind analog zu der in Fig. 2 in Seitenansicht gezeigten Detaildarstellung ausgebildet.

Variante Ausführungsformen sind in den Fig. 3 bis 7 dargestellt. Die Lamellen, Faltungen und geraden Abschnitte sind mit den gleichen Bezugsziffern bezeichnet und jeweils mit ' bis V versehen.

## Patentansprüche

1. Kolonne für Stoff- und direkten Wärmeaustausch mit Einbauelementen (1), welche aus parallel zur Kolonnenachse angeordneten, sich berührenden, gefalteten Lamellen (2) bestehen, wobei die Faltungen (3) der Lamellen (2) im Winkel zur Kolonnenachse liegen, und die Faltungen (3) von benachbarten Lamellen (2) sich kreuzen, dadurch gekennzeichnet, dass die Faltung (3) mindestens einer Anzahl der Lamellen (2) durch steilere Abschnitte (5) unterbrochen ist.

2. Kolonne nach Anspruch 1, dadurch gekennzeichnet, dass die steileren Abschnitte (5) in der Kolonne nahezu senkrecht gerichtet sind.

3. Kolonne nach Anspruch 1, dadurch gekennzeichnet, dass die Faltung (3) aller Lamellen (2) durch steilere Abschnitte (5) unterbrochen ist.

## Revendications

1. Colonne pour transfert de matière et échange thermique direct, comportant des éléments incorporés (1) qui consistent en des lamelles pliées (2) se touchant et disposées parallèlement à l'axe de la colonne, les pliures (3) des lamelles (2) étant inclinées par rapport à l'axe de la colonne et les pliures (3) de lamelles (2) adjacentes se croisant, caractérisée par le fait que la pliure (3) d'au moins un certain nombre desdites lamelles (2) est interrompue par des tronçons plus raides (5).

2. Colonne selon la revendication 1, caractérisée par le fait que les tronçons plus raides (5) sont orientés presque perpendiculairement dans la colonne.

3. Colonne selon la revendication 1, caractérisée par le fait que la pliure (3) de toutes les lamelles (2) est interrompue par des tronçons plus raides (5).

## Claims

1. A column for mass transfer and direct heat exchange, having internal elements (1) consisting of contacting folded lamellae (2) disposed parallel to the column axis, the folds (3) of the lamellae (2) being at an angle to the column axis and the folds (3) of adjacent lamellae (2) crossing one another, characterised in that the fold (3) of at least a number of lamellae (2) is interrupted by steeper portions (5).

2. A column according to Claim 1, characterised in that the steeper portions (5) in the column are directed approximately vertically.

3. A column according to Claim 1, characterised in that the fold (3) of all the lamellae (2) is interrupted by steeper portions (5).

Fig.1

Fig.2

Fig.3

Fig.4

Fig.5

Fig.6

Fig.7

0 070 920